# EUROPÄISCHE PATENTSCHRIFT

(11) **EP 3 655 294 B1**
(45) Veröffentlichungstag und Bekanntmachung des Hinweises auf die Patenterteilung: **02.03.2022**
(21) Anmeldenummer: 18746643.8
(22) Anmeldetag: 18.07.2018
(51) Int. Cl.: B60S 3/06

(54) **VORRICHTUNG UND VERFAHREN ZUM REINIGEN EINES FAHRZEUGS MIT MINDESTENS EINER AUSSENFLAECHE, DIE UM EINEN NEIGUNGSWINKEL ZUR VERTIKALEN GENEIGT IST**
DEVICE AND METHOD FOR CLEANING A VEHICLE WITH AT LEAST ONE OUTER SURFACE WHICH IS INCLINED BY AN ANGLE OF INCLINATION WITH RESPECT TO THE VERTICAL
DISPOSITIF ET PROCÉDÉ POUR LE NETTOYAGE D'UN VÉHICULE COMPRENANT AU MOINS UNE SURFACE EXTÉRIEURE INCLINÉE À UN ANGLE D'INCLINAISON PAR RAPPORT À LA VERTICALE

(30) Priorität: 18.07.2017 DE 102017116174
(43) Veröffentlichungstag der Anmeldung: 27.05.2020
(73) Patentinhaber: WashTec Holding GmbH, 86153 Augsburg (DE)
(72) Erfinder: HIRSCHMANN, Ruediger, 86157 Augsburg (DE); ARNDT, Sven, 86153 Augsburg (DE); ENDRESS, Florian, 86497 Horgau (DE); FOERG, Oliver, 86199 Augsburg (DE)
(74) Vertreter: Schwarz, Claudia
(86) Internationale Anmeldenummer: PCT/EP2018/069527
(87) Internationale Veröffentlichungsnummer: WO 2019/016275

(56) Entgegenhaltungen:
- WO-A1-2016/172397
- GB-A- 2 110 176
- JP-A- H0 379 455
- JP-A- H05 213 163
- JP-A- 2012 096 598
- JP-A- 2012 096 730

## Beschreibung

Die vorliegende Erfindung betrifft eine Vorrichtung und ein Verfahren zum Reinigen eines Fahrzeugs mit mindestens einer Außenfläche, die um einen Neigungswinkel zur Vertikalen geneigt ist.

In Fahrzeugwaschanlagen, wie Portalwaschanlagen oder Waschstraßen, werden die Flächen des Fahrzeugs typischerweise mit drehbaren Waschbürsten gereinigt. Insbesondere die Seiten- und Heckflächen des Fahrzeugs können Neigungen und Krümmungen aufweisen, die mit den Waschbürsten herkömmlicher Waschanlagen oft nicht ausreichend gereinigt werden können. Vor allem im Übergangsbereich von einer schrägen Seitenfläche zu einer schrägen Heckfläche kann das Reinigungsergebnis unbefriedigend ausfallen.

Aus DE102104112388 A1 und WO2016030218 A1 ist eine Fahrzeugwaschanlage bekannt, in der zum Reinigen einer Seitenfläche und einer anschließenden Heckfläche des Fahrzeugs mindestens eine Seitenwaschbürste eingesetzt wird, die aus einer senkrechten Grundstellung in geneigte Stellungen gebracht werden kann.

Aus der DE 1936889 A1 und der US 5715558 A sind frei pendelnd am oberen Ende ihrer Drehachse aufgehängte Seitenbürsten bekannt, die beim Reinigungsvorgang mit ihrem Gewicht auf das Fahrzeug einwirken und unerwünscht schwingen können.

JP H05213 163 A offenbart ein Waschsystem mit einer Steuerungsmöglichkeit der Seitenbürsten in Abhängigkeit von der Höhe eines Fahrzeugs, insbesondere von hohen oder niedrigen Fahrzeugen.

Aufgabe ist es, eine Vorrichtung und ein Verfahren zum Reinigen eines Fahrzeugs bereitzustellen, die ein gründliches Reinigungsergebnis auch im Übergangsbereich zweier Außenflächen und für unterschiedliche und variierende Neigungen der Außenflächen, sowie eine hohe Betriebssicherheit und eine Vermeidung von Fahrzeugschäden ermöglichen. Diese Aufgabe wird gelöst durch eine Vorrichtung nach Anspruch 1 und ein Verfahren nach Anspruch 4.

Gemäß einer ersten Ausführungsform der Erfindung umfasst die Vorrichtung zum Reinigen eines Fahrzeugs mit mindestens einer Außenfläche, die um einen Neigungswinkel zur Vertikalen geneigt ist: eine Einrichtung zum Ermitteln des Neigungswinkels der mindestens einen Außenfläche; eine Reinigungsbürste, die an der mindestens einen Außenfläche entlangführbar ist; eine Einrichtung zum Einstellen eines Neigungswinkels der Reinigungsbürste zur Vertikalen entsprechend dem Neigungswinkel der mindestens einen Außenfläche; eine Einrichtung zum Überwachen des Neigungswinkels der Reinigungsbürste während des Reinigens; und eine Einrichtung zum Regeln des überwachten Neigungswinkels der Reinigungsbürste während des Reinigens zur Angleichung an den Neigungswinkel der mindestens einen Außenfläche. Die Vorrichtung kann mehr als eine Reinigungsbürste umfassen.

Die Vorrichtung der vorstehenden Ausführungsform ermöglicht eine Überwachung und Regelung des Neigungswinkels der Reinigungsbürste während des Reinigungsvorgangs. Dabei wird insbesondere der überwachte Neigungswinkel der Reinigungsbürste geregelt, zur Angleichung an den Neigungswinkel der mindestens einen Außenfläche. Durch die Überwachung des Neigungswinkels der Reinigungsbürste kann zu jedem Zeitpunkt des Reinigungsvorgangs ein aktueller Ist-Wert des Neigungswinkels der Bürste ermittelt werden, der beim Regeln des Neigungswinkels der Bürste mit dem/den ermittelten Neigungswinkel(n) der mindestens einen Außenfläche als Soll-Wert verglichen wird. Somit erlaubt die Vorrichtung eine Führung der Reinigungsbürste, die an die gesamte äußere Kontur des Fahrzeugs, d.h. auch an den Übergangsbereich von den Seitenflächen zur Heckfläche und an unterschiedliche und variierende Neigungen der Seiten- und/oder Heckflächen, angepasst ist. Dadurch resultiert eine besonders gründliche Reinigung des Fahrzeugs. Gleichzeitig kann mit der Vorrichtung während der Reinigung eine sichere Annäherung der Bürste an die Fahrzeugoberfläche eingehalten werden. Zudem kann mit der Vorrichtung eine unerwünschte Schwingung der Bürste vermieden werden, indem bereits kleine Abweichungen vom gewünschten Neigungswinkel der Bürste erfasst werden und der Neigungswinkel nachgeregelt wird. Eventuelle dennoch auftretende unerwünschte Schwingungen der Bürste können ferner erkannt und ein entsprechender Sicherheitsstopp der Vorrichtung kann ausgelöst werden. Somit wird die Betriebssicherheit der Fahrzeugwaschanlage erhöht und Fahrzeugschäden werden vermieden.

Gemäß einer weiteren Ausführungsform kann der Neigungswinkel der mindestens einen Außenfläche zur Vertikalen in einem Bereich von -20° bis 90° liegen. Der einstellbare Neigungswinkel der Reinigungsbürste kann daher ebenfalls in einem Bereich von -20° bis 90° zur Vertikalen liegen. Somit kann nicht nur der Neigungswinkel der Seitenbürsten überwacht und an die Kontur des Fahrzeugs angepasst geregelt werden, sondern auch der Neigungswinkel anderer Bürsten der Vorrichtung zum Reinigen eines Fahrzeugs, z.B. einer Dachbürste oder einer Heckbürste. Bevorzugt kann der Neigungswinkel der mindestens einen Außenfläche und/oder der Reinigungsbürste im Bereich von -10° bis 50°, weiter bevorzugt im Bereich von -5° bis 15° zur Vertikalen liegen.

In einer weiteren Ausführungsform kann die Einrichtung zum Überwachen des Neigungswinkels der Reinigungsbürste einen Winkelsensor umfassen oder als Winkelsensor ausgebildet sein. Dies hat den Vorteil, dass die Neigung der Reinigungsbürste zur Vertikalen während des Reinigungsvorgangs intermittierend oder kontinuierlich überwacht werden kann.

Der Winkelsensor kann zumindest teilweise auf einer dem Neigungswinkel der Reinigungsbürste entsprechenden Neigungsachse angeordnet sein, z.B. auf einer den Neigungswinkel vorgebenden Neigungsachse. Damit lässt sich die Neigung der Bürste genau ermitteln. Insbesondere kann die Neigungsachse einer Schwenkachse der Bürste entsprechen, mittels derer der Neigungswinkel der Bürste eingestellt wird.

Ferner kann der Winkelsensor einen Magneten und einen Magnetfeldsensor umfassen. Dies birgt die Vorteile, dass die Funktion des Winkelsensors nicht Temperatur- und Feuchtigkeitsabhängig, gegenüber Erschütterungen unempfindlich, und auch nicht durch Wasserdruck beeinflussbar ist.

Gemäß anderer Ausführungsformen kann der Magnet entfernt vom Magnetfeldsensor auf der Neigungsachse angeordnet sein. Die Ermittlung des Neigungswinkels der Reinigungsbürste kann so kontinuierlich mit besonders hoher Genauigkeit erfolgen.

In einer Ausführungsform kann die Reinigungsbürste mit einem Anpressdruck an die Außenfläche beaufschlagbar sein, und die Vorrichtung kann weiter umfassen: eine Einrichtung zum Überwachen des Anpressdrucks; und eine Einrichtung zum Regeln des Anpressdrucks der Reinigungsbürste an die Außenfläche, insbesondere zum Regeln des überwachten Anpressdrucks. Damit erlaubt die Vorrichtung, eine abrupte und/oder unerwünschte Änderung des Anpressdrucks der Bürste zu erfassen und dieser durch Nachregeln des Anpressdrucks und/oder des Neigungswinkels der Bürste entgegenzuwirken. So kann die Regelung des Neigungswinkels der Reinigungsbürste zur Angleichung an den Neigungswinkel der Fahrzeugaußenfläche unterstützt und optimiert werden, um das gewünschte Reinigungsergebnis zu erzielen und die Betriebssicherheit der Vorrichtung zu erhöhen.

Eine weitere Ausführungsform der Erfindung betrifft ein Verfahren zum Reinigen eines Fahrzeugs mit mindestens einer Außenfläche, die um einen Neigungswinkel zur Vertikalen geneigt ist, umfassend
a) Ermitteln des Neigungswinkels der mindestens einen Außenfläche;
b) Einstellen eines Neigungswinkels einer Reinigungsbürste zur Vertikalen im Wesentlichen entsprechend dem Neigungswinkel der mindestens einen Außenfläche;
c) Entlangführen der Reinigungsbürste an der mindestens einen Außenfläche während des Reinigungsvorgangs;
d) Überwachen des Neigungswinkels der Reinigungsbürste während Schritt c); und
e) Regeln des überwachten Neigungswinkels der Reinigungsbürste während Schritt c) zur Angleichung an den Neigungswinkel der mindestens einen Außenfläche.

Das Verfahren kann mit einer Vorrichtung nach einer der vorstehenden Ausführungsformen durchgeführt werden und ermöglicht die gleichen Vorteile. Das Verfahren kann mit mehr als einer Reinigungsbürste ausgeführt werden. Dabei können in Schritt a) die Neigungswinkel mehr als einer Außenfläche ermittelt werden. Ferner können in den Schritten b) bis e) mehr als eine Reinigungsbürste eingesetzt werden.

In einer weiteren Ausführungsform des Verfahrens kann der Neigungswinkel der mindestens einen Außenfläche zur Vertikalen in einem Bereich von -20° bis 90° liegen. Ferner kann Schritt d) des Verfahrens unter Verwendung eines Winkelsensors bzw. mit einem Winkelsensor ausgeführt werden. Dabei kann der Winkelsensor zumindest teilweise auf einer dem Neigungswinkel der Reinigungsbürste entsprechenden Neigungsachse angeordnet sein, z.B. auf einer den Neigungswinkel vorgebenden Neigungsachse. Zudem kann im Verfahren von Ausführungsformen der Winkelsensor einen Magneten und einen Magnetfeldsensor umfassen. Dabei kann im Schritt d) des Verfahrens eine Veränderung der Ausrichtung des Magnetfelds des Magneten ermittelt werden. Ferner kann der Magnet entfernt vom Magnetfeldsensor auf der Neigungsachse angeordnet sein. Das Verfahren kann in weiteren Ausführungsformen Beaufschlagen der Reinigungsbürste mit einem Anpressdruck an die Außenfläche, Überwachen des Anpressdrucks, und Regeln des Anpressdrucks der Reinigungsbürste an die Außenfläche umfassen, insbesondere des überwachten Anpressdrucks.

Die vorgenannten Ausführungsformen des Verfahrens können entsprechende Modifikationen umfassen wie die oben erläuterten Ausführungsformen der Vorrichtung zum Reinigen eines Fahrzeugs und die gleichen vorteilhaften Wirkungen ermöglichen wie die oben erläuterten Ausführungsformen der Vorrichtung mit entsprechenden Merkmalen.

In einer anderen Ausführungsform des Verfahrens kann mindestens eine erste Außenfläche und eine zweite Außenfläche gereinigt werden, die aneinander angrenzen und um gleiche oder unterschiedliche Neigungswinkel zur Vertikalen geneigt sind, wobei im Schritt a) die Neigungswinkel der ersten und der zweiten Außenfläche ermittelt werden, die Schritte b) bis e) für die erste Außenfläche ausgeführt werden, und anschließend die Schritte b) bis e) für die zweite Außenfläche ausgeführt werden. Auf diese Weise kann der Übergangsbereich zwischen erster und zweiter Außenfläche des Fahrzeugs, z.B. zwischen Seiten- und Heckfläche, gründlich gereinigt werden.

In der folgenden detaillierten Figurenbeschreibung werden nicht einschränkend zu verstehende Ausführungsbeispiele mit deren Merkmalen und weiteren Vorteilen anhand der Figuren erläutert.

### Kurze Beschreibung der Figuren

- Fig. 1: zeigt schematisch eine Ausführungsform der Vorrichtung gemäß der Erfindung nach dem Einfahren des Fahrzeugs;
- Fig. 2: zeigt schematisch die Vorrichtung der Fig. 1 während Schritt b) einer Ausführungsform des Verfahrens gemäß der Erfindung;
- Fig. 3: zeigt schematisch die Vorrichtung der Fig. 1 während Schritt c) und d) einer Ausführungsform des Verfahrens gemäß der Erfindung;
- Fig. 4: zeigt schematisch die Vorrichtung der Fig. 1 während Schritt c) und d) einer weiteren Ausführungsform des Verfahrens;
- Fig. 5: zeigt schematisch eine Ausführungsform des Verfahrens; und
- Fig. 6: zeigt schematisch eine weitere Ausführungsform des Verfahrens.

### Detaillierte Beschreibung der Erfindung

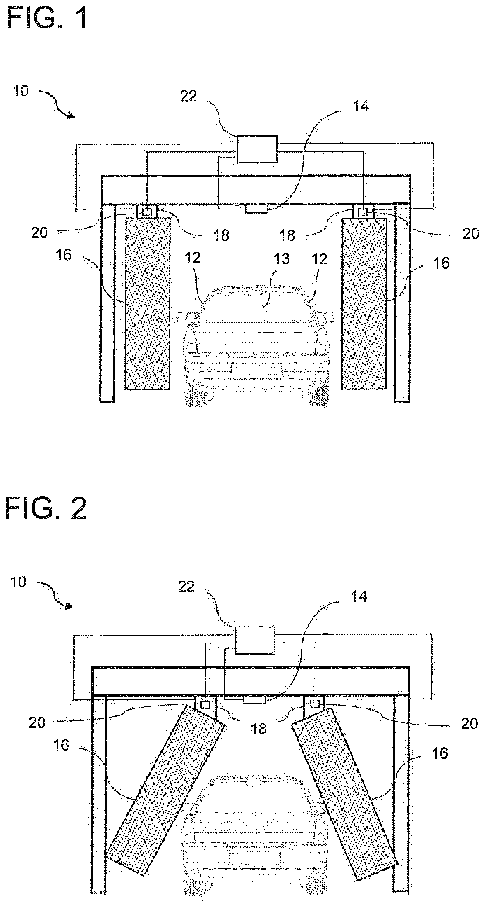

Fig. 1 zeigt eine erfindungsgemäße Ausführungsform der Vorrichtung 10 zum Reinigen eines Fahrzeugs nach dem Einfahren des Fahrzeugs, am Beispiel einer Portalwaschanlage.

Das Fahrzeug besitzt mindestens eine Außenfläche 12, 13, wobei in Fig. 1 zwei Seitenflächen 12 sowie eine Heckfläche 13 gezeigt sind, die jeweils um einen Neigungswinkel zur Vertikalen geneigt sind.

In der Vorrichtung 10 ist ein Rahmen mit einer Traverse vorgesehen, an der zwei Seitenbürsten 16 jeweils über eine Aufhängung 18 und jeweils um eine zentrale, längs verlaufende Drehachse der Bürste rotierbar angeordnet sind. Der Bürstenkörper bzw. die Borsten der Seitenbürsten können beispielsweise aus Polyethylen(PE)-Schaumstoff, PE oder Polypropylen(PP)-Filz bestehen. Wie aus Fig. 1 ersichtlich ist, sind die Seitenbürsten am oberen Ende ihrer jeweiligen Drehachse an der jeweiligen Aufhängung angebracht. Vor Inbetriebnahme der Vorrichtung sind die Seitenbürsten 16 sowie ihre Drehachsen wie in Fig. 1 gezeigt vertikal ausgerichtet. Die Seitenbürsten 16 können jeweils mittels der Traverse im Wesentlichen parallel zu den und entlang der Seitenflächen 12 und mit einem an der Traverse vorhandenen Schlitten im Wesentlichen parallel zur und entlang der Heckfläche 13 verfahren werden.

Die Aufhängungen 18 umfassen jeweils (nicht gezeigt) eine Bürstenhalterung und einen Drehantrieb, mit denen die betreffende Seitenbürste um ihre zentrale Drehachse in Rotation versetzt werden kann. Die Aufhängungen 18 sind jeweils mit zwei Stellantrieben (nicht gezeigt), z.B. Linearantrieben mit Pneumatik- oder Hydraulikzylindern, versehen, die die zentrale Drehachse der jeweiligen Seitenbürste um eine Schwenkachse (nicht gezeigt) im Wesentlichen parallel zur Seitenfläche des Fahrzeugs und um eine Schwenkachse (nicht gezeigt) im Wesentlichen parallel zur Heckfläche des Fahrzeugs verschwenken können. Weitere beispielhafte Details der Aufhängung 18 können der DE102104112388 A1 entnommen werden.

Die Vorrichtung 10 enthält ferner eine Einrichtung 14 zum Ermitteln der Neigungswinkel der Außenflächen 12 und/oder 13. Die Einrichtung 14 kann ein Bilderfassungsgerät, eine/einen die Kontur des Fahrzeugs abfahrende(n) Dachbürste oder Seitenbürste oder Dachtrockner, Lichtschranken oder Lichtgitter, Radar- oder Ultraschallsensoren, ein Eingabegerät, eine Datenbank und/oder eine Fahrzeugtyp-Erkennung umfassen. Zum Beispiel kann eine Datenbank vorgesehen sein, aus der nach Bestimmung oder Eingabe des Fahrzeugtyps der Neigungswinkel der Außenflächen 12 und 13 ermittelt werden kann. Die Einrichtung 14 kann alternativ oder zusätzlich zur Konturerfassung des Fahrzeugs dienen, die mit der Vorrichtung des vorliegenden Beispiels zu Beginn des Verfahrens zum Reinigen des Fahrzeugs erfolgen kann. Beispielsweise können die 3D-Kontur oder die Höhenkontur des Fahrzeugs ermittelt und daraus die Neigungswinkel bestimmt oder abgeleitet werden. Die Einrichtung 14 besteht im vorliegenden Beispiel aus einer Kamera. In Fig. 1 ist die Einrichtung 14 schematisch zentral an der Traverse der Vorrichtung angeordnet dargestellt.

Die Vorrichtung 10 besitzt ferner eine Einrichtung 18 zum Einstellen der Neigungswinkel der Seitenbürsten zur Vertikalen entsprechend den Neigungswinkeln der Außenflächen 12 und/oder 13. Die Einrichtung 18 wird im vorliegenden Beispiel mit der oben beschriebenen Aufhängung 18 und den Stellantrieben, mit denen die Bürstendrehachse parallel zur Heckfläche 13 und/oder parallel zu den Seitenflächen 12 des Fahrzeugs verschwenkt werden kann, realisiert.

In der Vorrichtung 10 ist ferner eine Einrichtung 20 zum Überwachen der Neigungswinkel der Seitenbürsten während des Reinigens vorgesehen. Im vorliegenden Beispiel ist die Einrichtung 20 als Winkelsensor ausgebildet, der den Neigungswinkel der jeweiligen Bürste bzw. ihrer Drehachse zur Vertikalen ermittelt. Pro Seitenbürste ist mindestens ein Winkelsensor vorgesehen. Alternativ kann im Falle einer gemeinsamen Ansteuerung der Seitenbürsten, mit der die zwei Seitenbürsten im Wesentlichen spiegelbildlich betrieben werden, nur auf einer Seitenbürste mindestens ein Winkelsensor vorgesehen sein.

Die Vorrichtung 10 enthält ferner eine datenverarbeitende Steuerung 22, die mit der Einrichtung 14 zum Ermitteln der Neigungswinkel der Außenfläche(n), der Einrichtung 18 zum Einstellen eines Neigungswinkels der Seitenbürsten 16 zur Vertikalen entsprechend den Neigungswinkeln der Außenfläche(n) und der Einrichtung 20 zum Überwachen des Neigungswinkels der Seitenbürsten über datenleitende Verbindungen verbunden ist, und die das Verfahren zur Reinigung der Fahrzeugs steuert.

Gleichzeitig wird durch die datenleitende und datenverarbeitende Vernetzung der Einrichtung 14 zum Ermitteln der Neigungswinkel der Außenfläche(n), der Einrichtung 18 zum Einstellen der Neigungswinkel der Seitenbürsten zur Vertikalen entsprechend den Neigungswinkeln der Außenfläche(n), der Einrichtung 20 zum Überwachen der Neigungswinkel der Seitenbürsten und der Steuerung 22 eine Einrichtung zum Regeln der überwachten Neigungswinkel der Seitenbürsten während des Reinigens zur Angleichung an den/die Neigungswinkel der Außenfläche(n) realisiert.

Im Betrieb wird mit der Vorrichtung 10 eine Ausführungsform des erfindungsgemäßen Verfahrens zum Reinigen eines Fahrzeugs mit mindestens einer Außenfläche, die um einen Neigungswinkel zur Vertikalen geneigt ist, durchgeführt.

In einem Beispiel umfasst das Verfahren die Schritte:
a) Ermitteln der Neigungswinkel der Seitenflächen 12;
b) Einstellen der Neigungswinkel der Seitenbürsten 16 zur Vertikalen im Wesentlichen entsprechend den Neigungswinkeln der Seitenflächen 12;
c) Entlangführen der Seitenbürsten 16 an den Seitenflächen während des Reinigungsvorgangs;
d) Überwachen der Neigungswinkel der Seitenbürsten 16 während Schritt c); und
e) Regeln der überwachten Neigungswinkel der Seitenbürsten 16 während Schritt c) zur Angleichung an die Neigungswinkel der Seitenflächen 12.

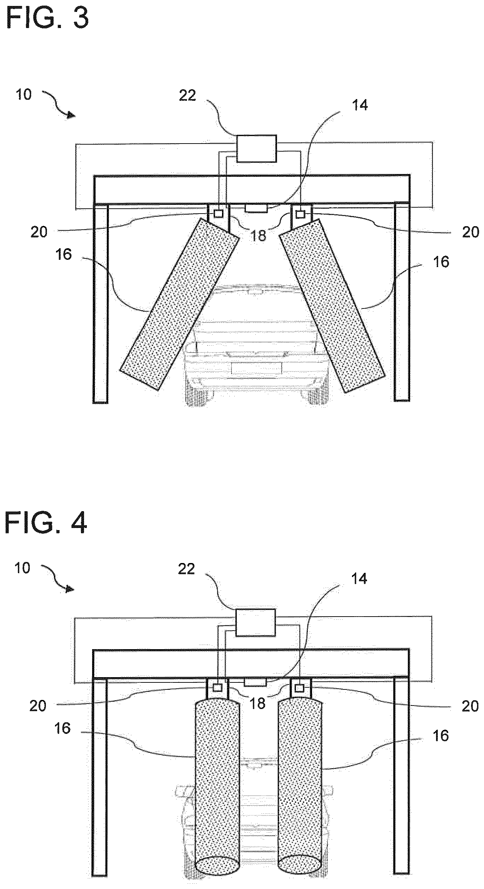

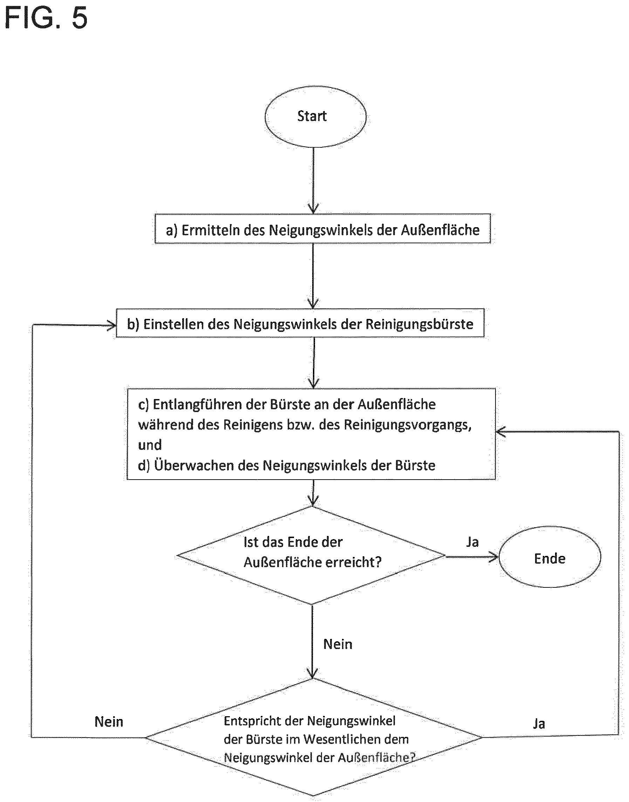

Das Verfahren des vorliegenden Beispiels wird nun anhand der Figuren 1 bis 5 beschrieben. Fig. 1 zeigt die Vorrichtung 10 nach dem Einfahren des Fahrzeugs. Fig. 2 und 3 stellen die Vorrichtung 10 während der Schritte b) bis d) des Verfahrens dar. Fig. 5 enthält ein Ablaufdiagramm einer Ausführungsform des Verfahrens.

Zunächst werden im Schritt a) die Neigungswinkel der Seitenflächen 12 mittels der Kamera der oben beschriebenen Einrichtung 14 ermittelt, im Rahmen einer anfänglichen Konturerfassung. Hierfür wird eine Überfahrt der Traverse mit Kamera 14 über das Fahrzeug auf dessen ganzer Länge durchgeführt. Im vorliegenden Beispiel wird dabei jeweils ein Neigungswinkel der Seitenflächen von ungefähr 10° zur Vertikalen festgestellt.

Danach werden die Seitenbürsten 16 in Rotation um ihre Drehachse versetzt, was in Fig. 1 schematisch dargestellt ist. Anschließend werden im Schritt b) die Neigungswinkel der Seitenbürsten 16 auf ungefähr 10° zur Vertikalen entsprechend den Neigungswinkeln der Seitenflächen 12 eingestellt, wie aus Fig. 2 ersichtlich ist. Dann werden die Seitenbürsten 16 durch Verschieben der Aufhängung 18 entlang der Traverse an die Seitenflächen 12 des Fahrzeugs herangefahren und im Schritt c) während des Reinigungsvorgangs durch Verschieben der Traverse im Wesentlichen parallel zu den Seitenflächen 12 daran entlanggeführt.

Während Schritt c), d.h. während des Führens der Seitenbürsten 16 entlang der Seitenflächen 12, werden die Neigungswinkel der Seitenbürsten mit der Einrichtung 20 zum Überwachen der Neigungswinkel der Seitenbürsten, im vorliegenden Beispiel mit dem Winkelsensor, kontinuierlich überwacht. Dies entspricht Schritt d) des Verfahrens.

Solange das Ende der Seitenflächen 12 nicht erreicht ist, werden die Schritte c) und d) fortgesetzt, und es wird kontinuierlich ermittelt (Schritt e)), ob die Neigungswinkel der Bürsten 16 im Wesentlichen den Neigungswinkeln von 10° der jeweiligen Seitenflächen 12 zur Vertikalen entsprechen. Dabei kann ein Toleranzbereich von ±5°, bevorzugt ±3°, mehr bevorzugt ±0,1° berücksichtigt werden. Falls die überwachten Neigungswinkel der Seitenbürsten im Wesentlichen den Neigungswinkeln der jeweiligen Seitenflächen 12 zur Vertikalen entsprechen, werden die Schritte c) bis e) solange wiederholt, bis das Ende der Seitenflächen 12 erreicht ist. Falls die überwachten Neigungswinkel der Seitenbürsten im Wesentlichen den Neigungswinkeln der jeweiligen Seitenflächen 12 zur Vertikalen nicht entsprechen, wird zusätzlich erneut Schritt b) ausgeführt und die Neigungswinkel der Seitenbürsten werden neu eingestellt, d.h. so nachgeregelt, dass sie den Neigungswinkeln der Seitenflächen im Wesentlichen entsprechen.

Sobald die Seitenbürsten das Ende der Seitenflächen 12 erreicht und gereinigt haben, wird das Verfahren beendet.

Durch die Regelung der überwachten Neigungswinkel der Seitenbürsten entsprechend den Neigungswinkeln der Seitenflächen kann während der Reinigung, insbesondere während Schritt c), eine sichere Eindringtiefe der behandelten Fahrzeugaußenfläche in den Bürstenkörper eingehalten werden. Auf diese Weise werden die Seitenflächen zufriedenstellend gereinigt, während gleichzeitig vermieden wird, dass die Seitenflächen durch die Seitenbürsten beschädigt werden.

Wie oben erläutert, ist im vorliegenden Beispiel die Einrichtung 20 zum Überwachen des Neigungswinkels der Seitenbürsten als Winkelsensor ausgebildet. Der Winkelsensor umfasst dabei einen Magneten und einen Magnetfeldsensor. Da es sich um einen magnetischen Winkelsensor handelt, werden Störungen des Winkelsensors durch Erschütterungen, Temperaturschwankungen, Feuchtigkeit oder durch den Wasserdruck minimiert. Bei der Überwachung des Neigungswinkels der Bürste wird nämlich die Veränderung der Ausrichtung des Magnetfelds bestimmt. Im vorliegenden Beispiel ist der Magnet entfernt vom Magnetfeldsensor auf der Schwenkachse der jeweiligen Bürste angeordnet. Dabei ist der Magnet beabstandet vom Magnetfeldsensor auf der Schwenkachse angebracht, mit der der zu überwachende Neigungswinkel eingestellt wird, und der Magnetfeldsensor ist an der Aufhängung 18 der Bürste, jedoch nicht auf der Schwenkachse, vorgesehen. So kann der Winkelsensor den Neigungswinkel der Bürste im Wesentlichen kontinuierlich und mit besonders hoher Genauigkeit überwachen. In Ausführungsformen mit mehreren Schwenkachsen pro Bürste kann für jede Schwenkachse der jeweiligen Bürste ein Winkelsensor vorgesehen sein. Es ist anzumerken, dass alle Ausführungsformen, bei denen ein Winkelsensor eingesetzt wird, eine besonders genaue Sensorik und Aktorik ermöglichen, weil es sich bei dem Winkelsensor vorteilhafterweise nicht um einen Punktsensor und auch nicht um einen Akzelerations-basiert betriebenen Sensor handelt.

Das vorliegende Beispiel der Vorrichtung 10 und des damit ausgeführten Verfahrens ist anhand einer Portalwaschanlage beschrieben. Die Erfindung ist jedoch nicht darauf beschränkt und kann in jeder Ausführungsform analog abgewandelt beispielsweise auch mit einer Waschstraße realisiert werden. Zudem können in einer Abwandlung der Vorrichtung 10 und des Verfahrens nicht zwei, sondern nur eine Seitenwaschbürste 16 mit entsprechender Aufhängung 18 vorgesehen sein bzw. verwendet werden. In alternativen Beispielen des Verfahrens kann die Rotation der Seitenbürsten 16 auch während Schritt b) initiiert werden. Ferner kann das Heranfahren der Seitenbürsten 16 an die Seitenflächen 12 auch vor Schritt b) erfolgen.

In einer Modifikation des vorstehenden Beispiels können die Vorrichtung 10 und das zugehörige Verfahren auch zum Reinigen der Heckfläche 13 eingesetzt werden, wie in Fig. 3 dargestellt ist. Dabei werden, nachdem das Ende der Seitenflächen 12 erreicht ist, die Seitenbürsten 16 auch für die Reinigung der Heckfläche 13 verwendet und die Schritte a) bis e) des Verfahrens analog für die Heckfläche 13 ausgeführt. Hierfür werden, nachdem das Ende der Seitenflächen 12 erreicht ist, die Seitenbürsten 16 wieder im Wesentlichen vertikal ausgerichtet und dann entsprechend dem im Schritt a) ermittelten Neigungswinkel der Heckfläche 13 eingestellt. Dies erfolgt, indem mittels der Aufhängungen 18 mit den entsprechenden Stellantrieben die zentralen Drehachsen der Seitenbürsten 16 jeweils um die Schwenkachse im Wesentlichen parallel zur den Seitenflächen des Fahrzeugs verschwenkt werden. Die geneigten Seitenbürsten 16 werden dann entlang der Heckfläche 13 jeweils bis zu deren Mitte geführt. Alternativ kann auch der für die Seitenflächen 12 voreingestellte Neigungswinkel der Seitenbürsten 16 zunächst beibehalten werden, die Seitenbürsten 16 können in der entsprechend abgewandelten Aufhängung 18 um ihre jeweiligen zentralen Drehachsen um ungefähr 90° gedreht werden, und der voreingestellte Neigungswinkel der Seitenbürsten kann an den Neigungswinkel der Heckfläche 13 im Schritt b) angepasst oder im Falle guter Übereinstimmung beibehalten werden, worauf dann die Schritte c) bis e) des Verfahrens für die Heckfläche durchgeführt werden. In einer weiteren Abwandlung kann die Reinigung der Heckfläche 13 nur mit einer der Seitenbürsten 16 ausgeführt werden, wobei diese entlang der gesamten Heckfläche 13 geführt wird.

Wie oben erläutert, können mit den Seitenbürsten zunächst die Seitenflächen und dann eine daran angrenzende Heckfläche gereinigt werden. Dabei können die Seiten- und Heckflächen gleiche oder unterschiedliche Neigungswinkel besitzen. Alternativ können zunächst eine Heckfläche und dann daran angrenzende Seitenflächen gereinigt werden. Im Falle eines breiten Übergangsbereichs von Seiten- zu Heckfläche, beispielsweise mit einem Neigungswinkel, der sich von demjenigen der Seiten- und/oder Heckflächen unterscheidet, kann im Schritt a) auch der Neigungswinkel des Übergangsbereichs ermittelt werden, und die Schritte b) bis e) können auch für den Übergangsbereich zwischen der Reinigung der Seitenflächen und der Reinigung der Heckfläche ausgeführt werden. Diese Ausführungsformen ermöglichen, dass der Übergangsbereich zwischen einer ersten und einer zweiten Außenfläche des Fahrzeugs, z.B. wie oben beschrieben zwischen Seiten- und Heckfläche, gründlich gereinigt werden kann.

In weiteren Abwandlungen der vorstehenden Beispiele können die Vorrichtung 10 und das zugehörigen Verfahren auf analoge Weise mindestens eine Heckbürste zum Reinigen der Heckfläche 13 aufweisen bzw. einsetzen. Die Heckbürste kann ausschließlich die Heckfläche 13 reinigen, indem der Neigungswinkel der Heckbürste entsprechend dem ermittelten Neigungswinkel der Heckfläche 13 wie oben beschrieben eingestellt, überwacht und geregelt wird. Die Heckbürste kann z.B. an einer weiteren Traverse des Waschportals getrennt von den Seitenbürsten vorgesehen sein, und mit einem an der zugehörigen Traverse angeordneten Schlitten parallel zur Heckfläche 13 daran entlanggeführt werden.

Es versteht sich, dass die Aufhängung 18 der jeweiligen Reinigungsbürste(n) für die oben beschriebenen Fälle einer Reinigung nur der Seitenflächen und einer Reinigung nur der Heckfläche abgewandelt ausgestaltet sein kann. Werden nur eine oder zwei Seitenflächen gereinigt, können für die Bürstenaufhängung jeweils eine Schwenkachse und ein Stellantrieb genügen, mit denen die zentrale Drehachse der Bürste im Wesentlichen parallel zur Heckfläche des Fahrzeugs verschwenkt werden kann. Im Falle einer Heckbürste, die nur die Heckfläche reinigt, kann eine Schwenkachse und ein Stellantrieb vorgesehen sein, durch die die zentrale Drehachse der Bürste im Wesentlichen parallel zur Seitenfläche des Fahrzeugs verschwenkt werden kann. Ferner können in alternativen Ausführungsformen der Vorrichtung und des Verfahrens andere Aufhängungen der Reinigungsbürsten vorgesehen sein. Zum Beispiel kann mindestens eine der Reinigungsbürsten frei schwingend am oberen Ende der Bürstenachse an einem Auslegerarm oder am oberen und unteren Ende der Bürstenachse an zwei Auslegerarmen aufgehängt sein. In diesem Fall kann die Einstellung des Neigungswinkels der Bürste über den oder die Auslegerarme unter Abstützung auf der jeweils zu reinigenden Außenfläche des Fahrzeugs erfolgen.

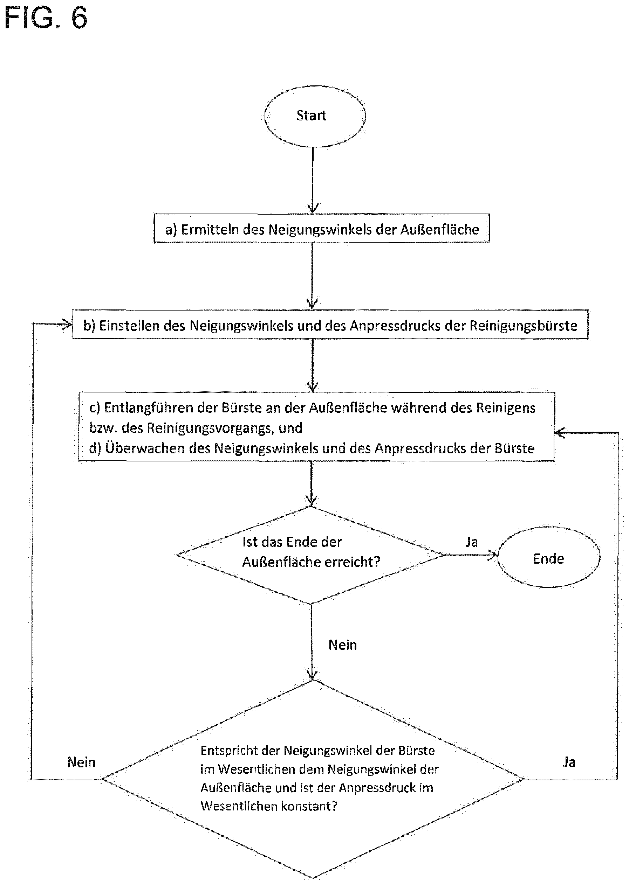

In weiteren Ausführungsformen kann die Reinigungsbürste mit einem Anpressdruck an die Außenfläche beaufschlagbar sein, und die Vorrichtung kann weiter umfassen: eine Einrichtung zum Überwachen des Anpressdrucks; und eine Einrichtung zum Regeln des Anpressdrucks der Reinigungsbürste an die Außenfläche, insbesondere zum Regeln des überwachten Anpressdrucks. In einer Ausführungsform des Verfahrens kann Schritt b) ein Beaufschlagen mit einem Anpressdruck an die Außenfläche, Schritt d) ein Überwachen des Anpressdrucks, und Schritt e) ein Regeln des Anpressdrucks, insbesondere des überwachten Anpressdrucks, umfassen, wie aus Fig. 6 ersichtlich ist.

Beispielsweise kann im Schritt d) der Anpressdruck durch eine Drehmomentüberwachung an der sich drehenden Bürste, z.B. mit einem Drehmomentsensor, oder durch eine Leistungsüberwachung von die Bürste verstellenden oder drehenden Antrieben, z.B. über die reale Leistungsaufnahme des Antriebs, indirekt erfasst und so überwacht werden. Im Schritt e) kann ermittelt werden, ob der Anpressdruck im Wesentlichen konstant bleibt. Dabei kann der Anpressdruck als im Wesentlichen konstant beurteilt werden, wenn er in einem Schwankungsbereich liegt, dessen unterer Grenzwert dem Anpressdruck auf einer ebenen Fahrzeugoberfläche und dessen oberer Grenzwert dem Anpressdruck auf einer unebenen Fahrzeugoberfläche entspricht, bei einer durchschnittlichen erwünschten Eindringtiefe der jeweiligen Fahrzeugoberfläche in den Bürstenkörper. Die unebene Fahrzeugoberfläche kann Einbuchtungen und/oder Vorsprünge, z.B. einen Radkasten und/oder einen Seitenspiegel aufweisen. In einem Beispiel kann ein gewünschter Sollbereich des Anpressdrucks, z.B. entsprechende Bereiche des Drehmoments und/oder der Leistung, aus zuvor durchgeführten Tests bekannt und in der Steuerung 22 gespeichert sein (Schritt a)), sowie im Schritt e) abgerufen und mit dem im Schritt d) erfassten Anpressdruck verglichen werden.

Mit diesen Ausführungsformen erlaubt die Vorrichtung, eine abrupte und/oder unerwünschte Änderung des Anpressdrucks der Bürste zu erfassen und dieser durch Nachregeln des Anpressdrucks und/oder des Neigungswinkels der Bürste entgegenzuwirken. Beispielsweise kann der Anpressdruck dadurch nachgeregelt werden, dass die Bürste unter Beibehaltung des Neigungswinkels mit ihrer Aufhängung 18 an der Traverse relativ zur Fahrzeugaußenfläche verschoben und/oder der Neigungswinkel der Bürste durch den betreffenden Stellantrieb der Aufhängung 18 verstellt wird. Alternativ oder zusätzlich kann die Leistung, mit der der Stellantrieb und/oder der Drehantrieb der Aufhängung 18 betrieben wird, verändert werden.

So kann durch eine zusätzliche Regelung des Anpressdrucks die Regelung des Neigungswinkels der Reinigungsbürste unterstützt und optimiert werden, um das gewünschte Reinigungsergebnis zu erzielen und die Betriebssicherheit der Vorrichtung zu erhöhen. Dies kann zum Beispiel bei einer plötzlichen Erhöhung des Anpressdrucks aufgrund einer übermäßigen Annäherung der Bürste an die Fahrzeugaußenfläche von Vorteil sein. Durch das Zusammenwirken beider Regelungen, d.h. der Regelungen des Neigungswinkels und des Anpressdrucks, kann daher die Betriebssicherheit der Vorrichtung weiter erhöht werden. Auch die Reinigung im Übergangsbereich zweier Außenflächen, z.B. von der Seiten- zur Heckfläche, kann so besonders gründlich erfolgen. Denn sobald die Bürste beim Entlangführen am Fahrzeug das Ende der zu reinigenden Außenfläche und die zugehörige Ecke zu einer anderen Außenfläche, d.h. den Übergangsbereich erreicht, verringert sich der Anpressdruck der Bürste, weil an der Ecke die Eindringtiefe des Fahrzeugs in das Volumen des sich drehenden Bürstenkörpers deutlich abnimmt. Auf diese Weise kann beim Entlangführen der Bürste an der Außenfläche zuverlässig erkannt werden, wenn eine Ecke der Außenfläche zu einer anderen Außenfläche, d.h. der Übergangsbereich, erreicht wird und der Übergangsbereich kann durch Nachregeln des Neigungswinkels und/oder des Anpressdrucks der Bürste gründlich gereinigt werden.

In einer weiteren Ausführungsform des Verfahrens kann im Schritt a) die Höhe des Fahrzeugs ermittelt werden und daraus ein oberer und unterer Grenzwert der Neigungswinkel der Seiten- bzw. Heckflächen abgeleitet werden. Im Schritt e) kann dann eine entsprechende Grenzwertregelung durchgeführt werden.

In Ausführungsformen der Vorrichtung und des Verfahrens können die Einrichtung zum Regeln des überwachten Neigungswinkels der Reinigungsbürste und die Regelung des überwachten Neigungswinkels der Reinigungsbürste im Schritt e) des Verfahrens auf bekannte Weise realisiert werden. Gleiches gilt für die Einrichtung und für das Verfahren zum Überwachen und Regeln des Anpressdrucks der Reinigungsbürste an die Außenfläche.

Beispielsweise können Standardregelungen mit P-, PI-, PD- oder PID-Verhalten eingesetzt werden. Bei den Ausführungsformen, in denen zusätzlich der Anpressdruck geregelt wird, kann beispielsweise eine Mehrgrößenregelung implementiert sein.

Des Weiteren können in Ausführungsformen der Vorrichtung bzw. des Verfahrens die Einrichtung zum Regeln des überwachten Neigungswinkels der Reinigungsbürste bzw. die Regelung des überwachten Neigungswinkels der Reinigungsbürste im Schritt e) derart ausgestaltet sein, dass bei Überschreiten eines oberen Grenzwerts des Neigungswinkels und/oder des Anpressdrucks ein Sicherheitsstopp der Vorrichtung bzw. des Verfahrens ausgelöst wird. Dies kann zum Beispiel dann erforderlich sein, wenn eine oder mehrere der Reinigungsbürsten in übermäßige Schwingungen geraten.

Insbesondere kann in Ausführungsformen des Verfahrens das Überwachen und/oder Regeln des Neigungswinkels der Reinigungsbürste(n) während des gesamten Reinigungsvorgangs erfolgen. Ferner kann das Überwachen des Neigungswinkels der Reinigungsbürste(n) unabhängig vom Ermitteln des Neigungswinkels der mindestens einen Außenfläche erfolgen. Analog kann in Ausführungsformen der Vorrichtung die Einrichtung zum Überwachen des Neigungswinkels der Reinigungsbürste(n) zu dessen Überwachung während des gesamten Reinigens ausgebildet sein. Auch kann die Einrichtung zum Regeln des überwachten Neigungswinkels der Reinigungsbürste(n) zu dessen Regelung während des gesamten Reinigens ausgebildet sein. Zudem kann die Einrichtung zum Überwachen des Neigungswinkels der Reinigungsbürste unabhängig von der Einrichtung zum Ermitteln des Neigungswinkels der mindestens einen Außenfläche ausgebildet sein und/oder arbeiten. In allen Ausführungsformen kann das Überwachen bzw. die Überwachung kontinuierlich oder intermittierend erfolgen. In Ausführungsformen der Vorrichtung und des Verfahrens kann es sich bei dem Neigungswinkel der mindestens einen Außenfläche um einen entlang einer oder mehrerer der Außenflächen variierenden Neigungswinkel handeln, der als solcher ermittelt wird.

Wie aus den vorstehenden Beispielen ersichtlich ist, kann mit der Vorrichtung und dem Verfahren von Ausführungsformen der Erfindung eine Überwachung und Regelung des Neigungswinkels, in einigen Ausführungsformen auch des Anpressdrucks, der Reinigungsbürste(n) während des Reinigungsvorgangs durchgeführt werden. Somit erlaubt die Vorrichtung eine Führung der Reinigungsbürste(n) entlang der Außenflächen, die an die gesamte äußere Kontur des Fahrzeugs, d.h. auch an den Übergangsbereich zwischen zwei Außenflächen, z.B. von den Seitenflächen zur Heckfläche, und an unterschiedliche und variierende Neigungen der Außenflächen, angepasst ist. Dies führt zu einer besonders gründlichen Reinigung des Fahrzeugs. Gleichzeitig kann mit der Vorrichtung während der Reinigung eine optimale und sichere Eindringtiefe der behandelten Fahrzeugaußenfläche in den Bürstenkörper bzw. in das Bürstenvolumen der jeweiligen Bürste eingehalten werden. Zudem kann mit der Vorrichtung eine unerwünschte Schwingung der Reinigungsbürste(n) vermieden werden. Eventuelle, dennoch auftretende unerwünschte Schwingungen der Bürste(n) können ferner erkannt und ein entsprechender Sicherheitsstopp der Vorrichtung bzw. des Verfahrens kann ausgelöst werden. Somit wird die Betriebssicherheit der Fahrzeugwaschanlage erhöht und Fahrzeugschäden werden vermieden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Fahrzeugwaschanlagen angewendet werden kann, sondern auch für andere Anlagen zur Reinigung von Gegenständen, beispielsweise von Flugzeugen. Des Weiteren können die Einrichtungen der Vorrichtung 10 auf mehrere physikalische Vorrichtungen verteilt realisiert werden.

### BEZUGSZEICHEN

- 10: Vorrichtung zum Reinigen eines Fahrzeugs mit mindestens einer Außenfläche
- 12: Seitenfläche
- 13: Heckfläche
- 14: Einrichtung zum Ermitteln des Neigungswinkels der mindestens einen Außenfläche
- 16: Reinigungsbürste
- 18: Einrichtung zum Einstellen eines Neigungswinkels der Reinigungsbürste zur Vertikalen entsprechend dem Neigungswinkel der mindestens einen Außenfläche
- 20: Einrichtung zum Überwachen des Neigungswinkels der Reinigungsbürste
- 22: Steuerung

## Patentansprüche

1. Vorrichtung zum Reinigen eines Fahrzeugs mit mindestens einer Außenfläche (12,13), die um einen Neigungswinkel zur Vertikalen geneigt ist, umfassend eine Einrichtung (14) zum Ermitteln von gegebenenfalls variierenden Neigungswinkeln der mindestens einen Außenfläche;
eine Reinigungsbürste (16), die an der mindestens einen Außenfläche entlangführbar ist;
eine Einrichtung (18) zum Einstellen eines Neigungswinkels der Reinigungsbürste zur Vertikalen entsprechend dem Neigungswinkel der mindestens einen Außenfläche; eine Einrichtung (20) zum Überwachen des Neigungswinkels der Reinigungsbürste während des Reinigens; und
eine Einrichtung (14, 18, 20, 22) zum Regeln des überwachten Neigungswinkels der Reinigungsbürste während des Reinigens zur Angleichung an die gegebenenfalls variierenden Neigungswinkel der mindestens einen Außenfläche;
wobei die Einrichtung (20) zum Überwachen des Neigungswinkels der Reinigungsbürste einen Winkelsensor umfasst, der einen Magneten und einen Magnetfeldsensor umfasst;
wobei der Winkelsensor zumindest teilweise auf einer dem Neigungswinkel der Reinigungsbürste entsprechenden Neigungsachse angeordnet ist, und der Magnet entfernt vom Magnetfeldsensor auf der Neigungsachse angeordnet ist; und
wobei der Winkelsensor derart ausgebildet ist, dass bei der Überwachung des Neigungswinkels der Bürste eine Veränderung der Ausrichtung des Magnetfelds des Magneten bestimmt wird.

2. Vorrichtung nach Anspruch 1,
wobei der Neigungswinkel der mindestens einen Außenfläche zur Vertikalen in einem Bereich von -20° bis 90° liegt.

3. Vorrichtung nach einem der Ansprüche 1 oder 2,
wobei die Reinigungsbürste (16) mit einem Anpressdruck an die Außenfläche (12, 13) beaufschlagbar ist;
und die Vorrichtung (10) weiter umfasst:
eine Einrichtung (18, 22) zum Überwachen des Anpressdrucks; und
eine Einrichtung (18, 22) zum Regeln des Anpressdrucks der Reinigungsbürste (16) an die Außenfläche.

4. Verfahren zum Reinigen eines Fahrzeugs mit mindestens einer Außenfläche (12, 13), die um einen Neigungswinkel zur Vertikalen geneigt ist, umfassend
a) Ermitteln von gegebenenfalls variierenden Neigungswinkeln der mindestens einen Außenfläche;
b) Einstellen eines Neigungswinkels einer Reinigungsbürste (16) zur Vertikalen entsprechend dem Neigungswinkel der mindestens einen Außenfläche;
c) Entlangführen der Reinigungsbürste (16) an der mindestens einen Außenfläche (12,13) während des Reinigungsvorgangs;
d) Überwachen des Neigungswinkels der Reinigungsbürste (16) während Schritt c); und
e) Regeln des überwachten Neigungswinkels der Reinigungsbürste (16) während Schritt c) zur Angleichung an die gegebenenfalls variierenden Neigungswinkel der mindestens einen Außenfläche,
wobei Schritt d) unter Verwendung eines Winkelsensors ausgeführt wird, der einen Magneten und einen Magnetfeldsensor umfasst;
wobei der Winkelsensor zumindest teilweise auf einer dem Neigungswinkel der Reinigungsbürste entsprechenden Neigungsachse angeordnet ist, und der Magnet entfernt vom Magnetfeldsensor auf der Neigungsachse angeordnet ist; und
wobei im Schritt d) eine Veränderung der Ausrichtung des Magnetfelds des Magneten ermittelt wird.

5. Verfahren nach Anspruch 4,
wobei der Neigungswinkel der mindestens einen Außenfläche zur Vertikalen in einem Bereich von -20° bis 90° liegt.

6. Verfahren nach Anspruch 4 oder 5,
wobei mindestens eine erste Außenfläche (12; 13) und eine zweite Außenfläche (13; 12) gereinigt werden, die aneinander angrenzen und um gleiche oder unterschiedliche Neigungswinkel zur Vertikalen geneigt sind,
im Schritt a) die Neigungswinkel der ersten und der zweiten Außenfläche ermittelt werden,
die Schritte b) bis e) für die erste Außenfläche (12) ausgeführt werden, und anschließend die Schritte b) bis e) für die zweite Außenfläche (13) ausgeführt werden.

7. Verfahren nach einem der Ansprüche 4 bis 6, umfassend Beaufschlagen der Reinigungsbürste (16) mit einem Anpressdruck an die Außenfläche (12, 13),
Überwachen des Anpressdrucks, und
Regeln des Anpressdrucks der Reinigungsbürste an die Außenfläche.

## Claims

1. Device for cleaning a vehicle having at least one exterior surface (12,13) inclined at an angle of inclination to the vertical, comprising:
means (14) for determining varying angles of inclination, if any, of said at least one exterior surface;
a cleaning brush (16) adapted to be guided along said at least one exterior surface; means (18) for adjusting an angle of inclination of the cleaning brush to the vertical corresponding to the angle of inclination of the at least one outer surface;
means (20) for monitoring the angle of inclination of the cleaning brush during cleaning;
and means (14, 18, 20, 22) for controlling the monitored angle of inclination of the cleaning brush during cleaning to match the varying angles of inclination, if any, of the at least one outer surface;
wherein the means (20) for monitoring the angle of inclination of the cleaning brush comprises an angle sensor comprising a magnet and a magnetic field sensor, wherein the angle sensor is disposed at least partially on an axis of inclination corresponding to the angle of inclination of the cleaning brush, and the magnet is disposed remotely from the magnetic field sensor on the axis of inclination; and wherein the angle sensor is configured to determine a change in orientation of the magnetic field of the magnet when monitoring the angle of inclination of the brush.

2. Device according to claim 1, wherein the angle of inclination of the at least one outer surface to the vertical is in a range of -20° to 90°.

3. Device according to any one of claims 1 or 2,
wherein the cleaning brush (16) is adapted to be applied with a contact pressure to the outer surface (12, 13);
and the device (10) further comprises:
means (18, 22) for monitoring the contact pressure; and means (18, 22) for controlling the contact pressure of the cleaning brush (16) against the outer surface.

4. A method of cleaning a vehicle having at least one external surface (12, 13) inclined at an angle of inclination to the vertical comprising:
a) determining possibly varying angles of inclination of the at least one outer surface;
b) adjusting an angle of inclination of a cleaning brush (16) with respect to the vertical in accordance with the angle of inclination of the at least one outer surface;
c) guiding the cleaning brush (16) along the at least one outer surface (12,13) during the cleaning process;
d) monitoring the angle of inclination of the cleaning brush (16) during step c); and
e) controlling the monitored angle of inclination of the cleaning brush (16) during step c) to match the possibly varying angles of inclination of the at least one outer surface,
wherein step d) is performed using an angle sensor comprising a magnet and a magnetic field sensor;
wherein the angle sensor is disposed at least partially on an axis of inclination corresponding to the angle of inclination of the cleaning brush, and the magnet is disposed remotely from the magnetic field sensor on the axis of inclination; and wherein in step d) a change in orientation of the magnetic field of the magnet is determined.

5. The method according to claim 4, wherein the angle of inclination of the at least one outer surface to the vertical is in a range of -20° to 90°.

6. A method according to claim 4 or 5, wherein at least a first outer surface (12; 13) and a second outer surface (13; 12) are cleaned which adjoin one another and are inclined to the vertical by the same or different angles of inclination, in step a) the angles of inclination of the first and the second outer surface are determined; steps b) to e) are carried out for the first outer surface (12), and subsequently steps b) to e) are carried out for the second outer surface (13).

7. A method according to any one of claims 4 to 6, comprising impacting the cleaning brush (16) with a contact pressure against the outer surface (12, 13), monitoring the contact pressure, and regulating the contact pressure of the cleaning brush against the outer surface.

## Revendications

1. Dispositif pour nettoyer un véhicule avec au moins une surface extérieure (12, 13) qui est inclinée d'un angle d'inclinaison par rapport à la verticale, comprenant:
un dispositif (14) pour déterminer des angles d'inclinaison éventuellement variables de la au moins une surface extérieure;
une brosse de nettoyage (16) qui peut être guidée le long de la au moins une surface extérieure;
un dispositif (18) pour régler un angle d'inclinaison de la brosse de nettoyage par rapport à la verticale en fonction de l'angle d'inclinaison de la au moins une surface extérieure;
un moyen (20) pour surveiller l'angle d'inclinaison de la brosse de nettoyage pendant le nettoyage; etun
moyen (14, 18, 20, 22) pour réguler l'angle d'inclinaison surveillé de la brosse de nettoyage pendant le nettoyage pour l'adapter aux angles d'inclinaison éventuellement variables de la au moins une surface extérieure;
le moyen (20) pour surveiller l'angle d'inclinaison de la brosse de nettoyage comprenant un capteur angulaire qui comprend un aimant et un capteur de champ magnétique;
le capteur angulaire étant disposé au moins partiellement sur un axe d'inclinaison correspondant à l'angle d'inclinaison de la brosse de nettoyage, et l'aimant étant disposé à distance du capteur de champ magnétique sur l'axe d'inclinaison; et
le capteur angulaire étant conçu de telle sorte que, lors de la surveillance de l'angle d'inclinaison de la brosse, une modification de l'orientation du champ magnétique de l'aimant est déterminée.

2. Dispositif selon la revendication 1, dans lequel l'angle d'inclinaison de ladite au moins une surface extérieure par rapport à la verticale est compris dans une plage de -20° à 90°.

3. Dispositif selon l'une des revendications 1 ou 2, dans lequel la brosse de nettoyage (16) peut être soumise à une pression d'application sur la surface extérieure (12, 13) ; et le dispositif (10) comprend en outre :
un dispositif (18, 22) de surveillance de la pression d'application ; etun dispositif (18, 22) de régulation de la pression d'application de la brosse de nettoyage (16) sur la surface extérieure.

4. Procédé de nettoyage d'un véhicule ayant au moins une surface extérieure (12, 13) inclinée d'un angle d'inclinaison par rapport à la verticale, comprenant les étapes suivantes:
a) déterminer des angles d'inclinaison éventuellement variables de ladite au moins une surface extérieure;
b) régler un angle d'inclinaison d'une brosse de nettoyage (16) par rapport à la verticale en fonction de l'angle d'inclinaison de ladite au moins une surface extérieure;
c) faire passer la brosse de nettoyage (16) le long de la au moins une surface extérieure (12, 13) pendant l'opération de nettoyage;
d) surveiller l'angle d'inclinaison de la brosse de nettoyage (16) pendant l'étape c) ; et
e) régler l'angle d'inclinaison surveillé de la brosse de nettoyage (16) pendant l'étape c) pour l'adapter aux angles d'inclinaison éventuellement variables de la au moins une surface extérieure,
dans lequel l'étape d) est réalisée en utilisant un capteur angulaire comprenant un aimant et un capteur de champ magnétique;
le capteur angulaire étant disposé au moins partiellement sur un axe d'inclinaison correspondant à l'angle d'inclinaison de la brosse de nettoyage, et l'aimant étant disposé à distance du capteur de champ magnétique sur l'axe d'inclinaison; et
une modification de l'orientation du champ magnétique de l'aimant étant déterminée à l'étape d).

5. Procédé selon la revendication 4, dans lequel l'angle d'inclinaison de ladite au moins une surface extérieure par rapport à la verticale est compris dans une plage de -20° à 90°.

6. Procédé selon la revendication 4 ou 5, dans lequel on nettoie au moins une première surface extérieure (12 ; 13) et une deuxième surface extérieure (13 ; 12) qui sont adjacentes l'une à l'autre et qui sont inclinées par rapport à la verticale selon des angles d'inclinaison identiques ou différents,
dans l'étape a) on détermine les angles d'inclinaison de la première et de la deuxième surface extérieure,
les étapes b) à e) sont exécutées pour la première surface extérieure (12), et ensuite les étapes b) à e) sont exécutées
pour la deuxième surface extérieure (13).

7. Procédé selon l'une quelconque des revendications 4 à 6, comprenant: l'application de la brosse de nettoyage (16) avec une pression d'appui sur la surface extérieure (12, 13), la surveillance de la pression d'appui, et la régulation de la pression d'appui de la brosse de nettoyage sur la surface extérieure.
